# EUROPÄISCHE PATENTSCHRIFT

(11) **EP 2 819 794 B1**
(45) Veröffentlichungstag und Bekanntmachung des Hinweises auf die Patenterteilung: **21.08.2019**
(21) Anmeldenummer: 12709546.1
(22) Anmeldetag: 27.02.2012
(51) Int. Cl.: B21D 19/04, B21D 53/84, B21C 1/24

(54) **ANTRIEBS-HOHLWELLE MIT FLANSCH UND HERSTELLUNGSVERFAHREN DAFÜR**
HOLLOW DRIVE SHAFT WITH FLANGE AND METHOD FOR THE PRODUCTION THEREOF
ARBRE CREUX DE TRANSMISSION POURVU D'UNE BRIDE ET SON PROCÉDÉ DE FABRICATION

(43) Veröffentlichungstag der Anmeldung: 07.01.2015
(73) Patentinhaber: SchmitterGroup AG, 97289 Thüngen (DE)
(72) Erfinder: GÜNTHER, Friedhelm, 44359 Dortmund (DE); DIRSCHERL, Ralf, 97289 Thüngen (DE); SCHMIDT, Marco, 97289 Thüngen (DE)
(74) Vertreter: Götz, Georg Alois
(86) Internationale Anmeldenummer: PCT/EP2012/053286
(87) Internationale Veröffentlichungsnummer: WO 2013/127425

(56) Entgegenhaltungen:
- DE-A1- 3 805 814
- DE-A1-102007 045 719
- DE-U1- 29 924 160
- JP-A- 1 071 527
- US-A1- 2005 275 223

## Beschreibung

Die Erfindung betrifft ein Verfahren zur Herstellung einer rohrartigen, hohlen Antriebswelle, insbesondere Kardanwelle, aus einem Vorrohr. Dieses kann beispielsweise ein längsgeschweißtes, normalgeglühtes Stahlrohr sein. Im Zuge der Herstellung wird das Vorrohr verlängert, indem es zumindest teilweise mittels ein- oder mehrmaligen Abstreckens oder anderer Kaltumformung in seiner Wandstärke bzw. -dicke reduziert und/oder in seinem Innen- und/oder Außendurchmesser verändert wird. Ferner betrifft die Erfindung eine hohle Antriebswelle, insbesondere Kardanrohr, welche bzw. welches im Wege der Abstreckung und/oder einer sonstigen Kaltumformung verfestigt und dabei mit über seine Längserstreckung unterschiedlichen Wanddicken und/oder unterschiedlichen Innen- und/oder Außendurchmessern versehen ist, insbesondere hergestellt durch das vorgenannte Verfahren.

Die Herstellung von Rohren mit im Wege der Kaltumformung einstückig angeformtem Überlappungsflansch ist bekannt, der in seiner Wandstärke entweder dicker oder dünner als die sonstige Rohrwandung ausgeführt ist (JP 1 071 527 A, Figuren 8 und 9 dort). Ferner ist es bekannt, für das Bauwesen oder im industriellen Bereich Flüssigkeits-Transportrohre durch Kaltumformung einstückig mit einem Flansch mit Bereichen unterschiedlicher Dicke zu versehen, wobei allein der Flansch selbst mit der höchsten Wanddicke gestaltet ist (US 2005/275 223 A1).

Hochfeste, kaltumgeformte Kardanrohrteile für Antriebsstränge, hergestellt nach dem Verfahren etwa der zuvor genannten Art, sind bekannt (DE 10 2007 045 719 A1). Demnach werden Gelenk- bzw. Kardanwellen zur Übertragung von Drehmomenten beispielsweise von einem Verbrennungsmotor eines Kraftfahrzeugs zu dessen Antriebsachse eingesetzt. Die übertragbaren Drehmomente sollen möglichst hoch sein, andererseits soll die Kardanwelle ein möglichst geringes Eigengewicht zwecks minimierten Energieverbrauchs aufweisen. Als Werkstoff für die Kardanwelle wird üblicherweise Stahl der Güte E355+N (siehe europäische Norm EN 10305-2 vom November 2002, dortige Tabellen 1 und 2, oder EN 10305-3 vom 1. Mai 2010) verwendet, aber auch der Einsatz anderer Stahlwerkstoffe mit Legierungen ist möglich.

Nach dem in der DE 10 2007 045 719 A1 offenbarten Herstellungsverfahren wird das genannte Stahlrohr kalt verformt, nämlich abgestreckt, wobei das Vorrohr in Richtung ihrer Längsachse wenigstens zwei unterschiedliche Wanddurchmesser und wenigstens zwei unterschiedliche Innen- und Außendurchmesser erhält. Aus der Kaltumformung resultiert für die verformten Bereiche eine im Vergleich zum Vorrohr erhöhte Festigkeit. Aufgrund der Volumenkonstanz des Vorrohres ergibt sich durch die Reduzierung der Wanddicken sowie der Durchmesser eine Verlängerung in axialer Richtung.

Der Erfindung liegt die Aufgabe zugrunde, bei einer hochfesten, kaltumgeformten Leichtbau-Antriebshohlwelle, insbesondere Kardanwelle die mechanischen Kopplungsmöglichkeiten am Wellenende zu erweitern. Zur Lösung wird auf das im Anspruch 1 angegebene Antriebswellen-Herstellungsverfahren und auf die im Anspruch 11 angegebene, hohle Antriebswelle verwiesen. Optionale Ausgestaltungen dieser Erfindungen ergeben sich aus den abhängigen Ansprüchen sowie der nachfolgenden Beschreibung und den Zeichnungen.

Demnach wird bei der Herstellung der hohlen Antriebswelle die Ausbildung eines Endflansches mit in den Kaltumformprozess einbezogen. Dabei wird von der eröffneten Möglichkeit Gebrauch gemacht, bei der Kaltumformung, insbesondere beim Abstrecken, den Flanschbereich mit einer im Vergleich zu anderen Rohrabschnitten stärkeren Wanddicke zu belassen, so dass vor allem die Stabilität der Flansch-Ankopplung beispielsweise im Antriebsstrang eines Kraftfahrzeugs erhöht ist. Andererseits lässt sich durch die Kaltumformung der nicht zum Flansch gehörige oder diesem nicht benachbarte Teil des Vorrohres mit einer nur minimalen Wanddicke realisieren, was dem angestrebten Ziel des auf die Rohrlänge bezogenen Leichtbaus entspricht. Die mit der Kaltumformung einhergehende Kaltverfestigung sorgt auch außerhalb des Flanschbereichs für die notwendige hohe Festigkeit.

Zur Gewährleistung einer ausreichenden Maßgenauigkeit auch im Flanschbereich besteht eine optionale Erfindungsausbildung darin, dass die Kaltumformung des dem Flansch zugeordneten Vorrohr- bzw. Wellenendabschnitts in eine Flanschform auch ein zumindest einmaliges Abstrecken dieses Endabschnitts auf einem Dorn umfasst. Dies dient der Feindimensionierung der Wanddicke im Flanschbereich. Der damit erzielte Vorteil besteht darin, dass beim nachfolgenden Biegen bzw. Umklappen des Rohrendes zur charakteristischen Flanschform ein Flansch mit gleichförmiger Wanddicke leichter erzielbar wird.

Für das dem Abstrecken des Flanschbereichs nachfolgende Biegen besteht eine optionale Erfindungsausbildung in der Untergliederung in einen Vorformschritt und einem nachfolgenden Flachformschritt: Im Vorformschritt wird die Wandung am Ende des Vorrohres mit einem zumindest teilweise kegelartigen, insbesondere kreiskegelartigen Biegestempel vorgeformt. Dabei wird mittels des gegenüber der Rohrachse schräg verlaufenden Außenmantels des Biegestempels die Wandung am Rohrende in eine gegenüber der Rohrachse schrägwinklige Stellung versetzt. Für den Flachformschritt wird dann ein anderer Biegestempel mit einer rechtwinkligen Kontur eingesetzt, um die bereits schräg gestellte Wandung in eine gegenüber der Rohrachse rechtwinklige Stellung zu verbiegen. In der Kombination dieser beiden Verformungsschritte im Rahmen der Kaltverformung ist die Möglichkeit eröffnet, bei den Werkzeugen Biegestempel verbunden mit Gegenhalte-Matrize bzw. -Gesenk auf rotatorische Bewegungskomponenten verzichten zu können. Dies vereinfacht Aufbau und Konstruktion der notwendigen Biege-Umformwerkzeuge.

Aus der DE 199 53 525 C2 "Verfahren zur Herstellung eines metallischen Rohrformstückes" ist zwar eine zweistufiges Flanschausbildung mit Schrägstellung und nachfolgender Flachstellung des Rohrendes bekannt. Allerdings wird das zu formende Ende vor der Umformung auf Schmiedetemperatur erwärmt. Eine Kaltumformung, verbunden mit einer Kaltverfestigung, kann infolgedessen nicht statt finden. Durch die bei der Warmumformung nachfolgende Wärmeschrumpfung ist die Maßgenauigkeit gegenüber der erfindungsgemäß eingesetzten Kaltumformung vermindert. Folgerichtig offenbart die DE 199 53 525 C2 ein Metallrohr mit nur einer einheitlichen Wanddicke. Als konkrete Anwendung wird der Einsatz als Nockenwelle offenbart.

Mit Vorteil umfasst der Flachform-Schritt, dass mittels des rechtwinkligen Biegestempels die Flansch-Stirnseite bis an die Fließgrenze platt gedrückt, insbesondere geprägt wird. Dadurch wird für den Flansch auf dessen Stirn- bzw. Anschlussseite eine eindeutige Stirnseitenform gebildet.

Der Erhöhung der Festigkeit des am Rohrende ausgeformten Flansches dient es, wenn nach einer anderen optionalen Erfindungsausbildung mit einem entsprechend angepassten Prägewerkzeug eine Sicke oder eine Versteifungsrippe in den Flansch eingeprägt wird. Zweckmäßig ist der rechtwinklige Biegestempel für den Flachformschritt beispielsweise bereits mit einer entsprechenden konvexen oder konkaven, länglichen Wölbung zur Einprägung einer entsprechend länglichen Vertiefung oder auch Erhöhung gestaltet. In weiterer Konkretisierung dieser Erfindungsausbildung wird die Sicke oder vertiefte oder erhabene Versteifungsrippe in den 90°-Umbiegungsbereich eingeprägt, wo der Rohrbereich in den Flanschbereich übergeht.

Damit bei der Flanschausbildung keine Material-Überbeanspruchung eintritt, werden nach einer optionalen Erfindungsausbildung vor der Flanschausbildung am Vorrohr- bzw. Wellenende ein oder mehrere Wandungsteile, insbesondere Bogenabschnitte der Rohrwandung, derart abgetrennt, beispielsweise ausgestanzt, dass voneinander beabstandete, achsparallele Stirnendenvorsprünge verbleiben. Zum Ausstanzen kann zweckmäßig ein Stanzwerkzeug eingesetzt werden, das einen Schneidstempel und eine Schneidmatrize aufweist. Letztere ist mit einem an die auszustanzenden Wandungsteile angepassten Schneiddurchgang versehen.

Um relativ zur angestrebten Rohrlänge eine möglichst leichte Bauweise zu erzielen, ist ein möglichst großer Umformgrad bei der Kaltumformung anzustreben. Es gilt, soviel Wandverdünnung wie möglich zu schaffen. Dem dient eine vorteilhafte Erfindungsausbildung, wonach das Vorrohr einem Vorabstrecken in bestimmten Rohrbereichen unterworfen wird. Und zwar werden die Rohrabschnitte vorabgestreckt, die jeweils einen Abstand von dem Rohrendbereich aufweisen, der dem Flansch zugeordnet ist. Im Zuge des Vorabstreckens erfolgt eine Verminderung der jeweiligen Wanddicke bzw. -stärke und/oder eine Verengung und/oder Aufweitung des jeweiligen Innen- und/oder Außendurchmessers.

Wie an sich bekannt, geht mit der Kaltumformung, beispielsweise entsprechend dem vorgenannten Vorabstrecken, eine Materialverfestigung einher. Die Duktilität des Werkstoffes wird dadurch vermindert. Dem wird mit einer optionalen Erfindungsausbildung entgegengewirkt, wonach sich vorzugsweise unmittelbar an das Vorabstrecken ein Zwischenglühschritt (Normalglühen, bei Stahl knapp unter 800 bis 950 Grad Celsius) anschließt. Dadurch lässt sich im Rohrmaterial der ursprüngliche Gefügezustand wieder herstellen, die Folgen der Kaltverformung - Kaltverfestigung - weitgehend rückgängig machen, und der Verformungsgrad nimmt beim Rohrmaterial wieder zu. In den weiteren Herstellungsstufen lassen sich dann weitere Abstreckschritte zur Vergrößerung der Wanddickenunterschiede durchführen.

Vor allem nach dem Vorabstrecken und dem anschließenden Zwischenglühen sind weitere Abstreckmaßnahmen zweckmäßig, um die Wanddicken, Durchmesser und sonstige geometrische Abmessungen zu verfeinern. Reduzierungen des Außen- und/oder Innendurchmessers des Vorrohres und/oder von dessen Wanddicken können bei einem dem Flansch nicht zugeordneten Rohr-Endabschnitt oder bei ein oder mehreren Mittelabschnitten zwischen den Rohrenden oder auch beim Flanschendabschnitt vor der eigentlichen Ausbildung der Flanschform mit jeweils speziell ausgebildeten Umformwerkzeugen erfolgen.

Die erfindungsgemäße Antriebshohlwelle, insbesondere Kardanrohr, zeichnet sich durch die über Kaltverformung erzielte Leichtbauweise aus: Die Rohrabschnitte außerhalb des Flanschbereichs besitzen eine relativ geringe Wanddicke, und nur der einstückig bzw. integral angeformte Flanschbereich weist zur Aufnahme hoher Drehmomente eine im Verhältnis höhere Wanddicke auf. Diese Wanddickenunterschiede erfordern mehrmaliges Abstrecken mit Zwischenglühen, wie oben erläutert. Mit Vorteil gehen die Wellen- bzw. Rohrabschnitte außerhalb des Flanschbereichs über eine vorzugsweise rampenartig schräg gegenüber der Rohrachse verlaufenden Außendurchmessererweiterung in den Flanschbereich oder den unmittelbar daran angrenzenden Rohr- oder Wellenabschnitt über.

Eine zweckmäßige Ausbildung der erfindungsgemäßen Antriebshohlwelle besteht darin, dass der dem Flansch nicht zugehörige und/oder nicht benachbarte Wellen- bzw. Rohrteil in wenigstens einen mittleren Abschnitt zwischen den Rohrenden und einen vom Flansch entfernten Endabschnitt untergliedert ist, und diese genannten Abschnitte zueinander unterschiedliche Wanddicken und/oder unterschiedliche Innen- und/oder Außendurchmesser aufweisen. Dadurch kann jeweiligen Einbaubedingungen Rechnung getragen werden.

Dem oben angesprochenen Verfahrensschritt des Abtrennens eines oder mehrerer Wandungsbogenabschnitte entspricht es, wenn nach einer optionalen Erfindungsausbildung vom Rohr- bzw. Wellenende zweckmäßig radial vorspringende Teilstücke zur Bildung des Flansches gestaltet sind, die voneinander Abstände in oder parallel zur Rohr-Umfangsrichtung aufweisen. Zur Erhöhung der Stabilität sind die vorspringenden Teilstücke über vorzugsweise rundliche Flanschstummel-Abschnitte verbunden, die am Wellenende zu radial abstehenden Endkanten umgebogen sind. Vorzugsweise besitzen die Flanschstummel-Abschnitte zwischen den vorspringenden Teilstücken die Form von Teilkreisbögen.

Weitere Einzelheiten, Merkmale, Merkmalskombinationen und Wirkungen auf der Basis der Erfindung ergeben sich aus der nachfolgenden Beschreibung bevorzugter, beispielhafter Ausführungsformen der Erfindung sowie aus den Zeichnungen. Diese zeigen in:
- Figur 1: eine erfindungsgemäße Antriebshohlwelle im Querschnitt;
- Figur 2: ein Vor- bzw. Ausgangsrohr für das erfindungsgemäße Herstellungsverfahren im Querschnitt;
- Figur 3: das Vorrohr entsprechend Figur 2 beim Herstellungsschritt "Mitnehmerkante anformen";
- Figur 4: das vorgenannte Vorrohr beim Herstellungsschritt "Vorabstrecken der Rohrbereiche I und II";
- Figur 5: das vorgenannte Vorrohr beim Herstellungsschritt "Zwischenglühen";
- Figur 6: das vorgenannte Vorrohr beim Herstellungsschritt "Durchmesser bei der Mitnehmerkante reduzieren";
- Figur 7: das vorgenannte Vorrohr beim Herstellungsschritt "Abstrecken Rohrbereich I";
- Figur 8: das vorgenannte Vorrohr beim Herstellungsschritt "Abstrecken Rohrbereich II";
- Figur 9: das vorgenannte Vorrohr beim Herstellungsschritt "Abstrecken Rohrbereich III";
- Figur 10: das vorgenannte Vorrohr beim Herstellungsschritt "Enden bearbeiten";
- Figur 11: in abgeschnittener Darstellung den der Flanschausbildung zugeordneten Endabschnitt des vorgenannten Vorrohres beim Herstellungsschritt "Flanschbereich vorstanzen";
- Figur 12: eine Querschnittsdarstellung nach Linie XII-XII in Figur 11;
- Figur 13: den der Flanschausbildung zugeordneten Endabschnitt des Vorrohres beim Herstellungsschritt "Flansch vorformen";
- Figur 14: den der Flanschausbildung zugeordneten Endabschnitt des Vorrohres beim Herstellungsschritt "Flansch flachformen und prägen";
- Figur 15: den zum Flanschbereich gehörigen Endabschnitt des Vorrohres bzw. der Antriebshohlwelle beim Herstellungsschritt "Flansch fertig beschneiden und lochen";
- Figur 16: eine Stirnansicht in axialer Richtung auf das mit Flansch versehene Stirnende der Antriebshohlwelle;
- Figur 17: ein zur Figur 1 alternatives Ausführungsbeispiel der Antriebshohlwelle im Querschnitt;
- Figur 18: in perspektivischer Darstellung ein weiteres, alternatives Ausführungsbeispiel mit einer Versteifungsrippe im Übergangsbereich Rohr/Flansch.

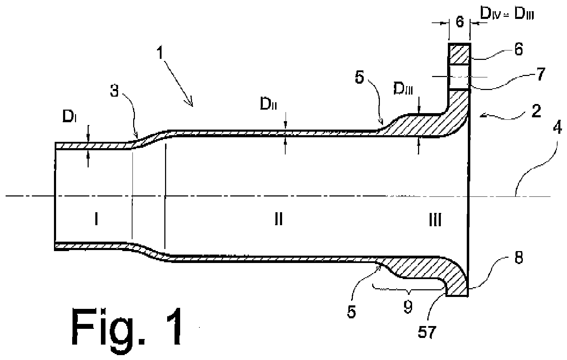

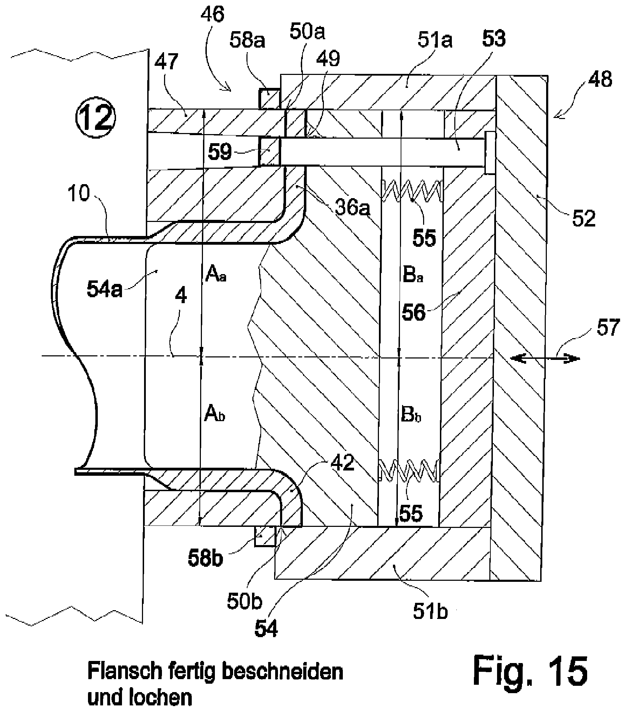

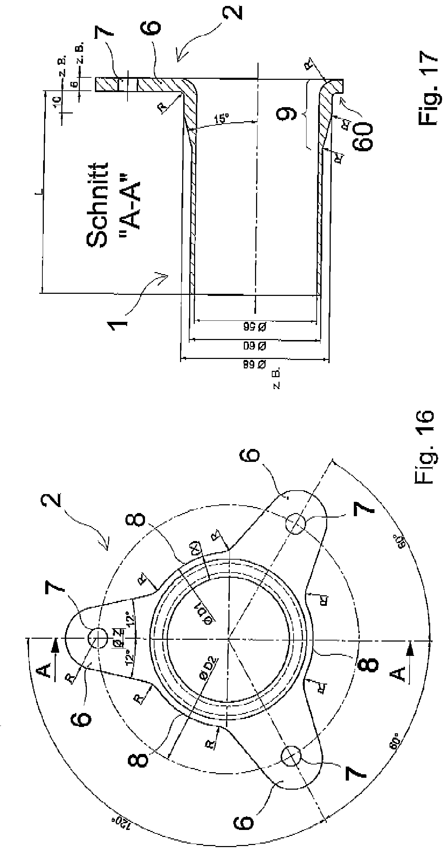

Gemäß Figur 1 ist die Antriebshohlwelle bzw. das Kardanrohr 1 in einen ersten Längsabschnitt I, einen zweiten Längsabschnitt II und einen dritten Längsabschnitt III untergliedert. Diese lassen sich voneinander durch geometrische Abmessungen abgrenzen. So weist der erste Längsabschnitt I, welcher vom im dritten Längsabschnitt III angeordneten Fertigflansch 2 mit Abstand bzw. entfernt angeordnet ist, den geringsten Innen- und Außendurchmesser sowie die Wanddicke D_{I} auf. Er geht über eine Übergangs-Durchmessererweiterung 3 mit bezüglich der Rohrmittelachse 4 zum Flanschende hin schräg ansteigenden Verlauf in den zweiten Längsabschnitt II ("Mittelabschnitt") zwischen dem ersten Längsabschnitt I und den dritten Längsabschnitt III ("Endabschnitte") über. Der Längsabschnitt bzw. Mittelabschnitt II besitzt die Wanddicke D_{II} sowie einen größeren Innen- und Außendurchmesser als der erste Längs- bzw. Endabschnitt I. Der Mittelabschnitt II geht über eine zweite Übergangs-Durchmessererweiterung 5, die ebenfalls schrägwinklig bezüglich der Mittelachse 4 zum Flanschende hin ansteigt, in den dritten Längsabschnitt bzw. zweiten Endabschnitt III über. Dieser weist etwa denselben Innendurchmesser wie der benachbarte Mittelabschnitt II, jedoch einen größeren Außendurchmesser sowie auch eine wesentlich höhere Wanddicke D_{III} als der Mittelabschnitt II auf. Die Wanddicke D_{III} setzt sich auch in die einzelnen Fertigflansch-Vorsprünge 6 mit Schraublöchern 7 (siehe auch Figuren 15 und 16 mit Beschreibung) sowie in die kreisbogenförmigen Fertigflansch-Stummelabschnitte 8 fort.

Gemäß Figur 1 stellt das Kardanrohr 1 ein sogenanntes Integralbauteil dar, das heißt der Fertigflansch 2 ist mit den Rohrabschnitten I-III einstückig, einteilig bzw. integral über die nachfolgend beschriebene Kaltumformtechnik hergestellt. Eine Schweißnaht etwa zur Anfügung des Flansches an das Rohrende wird deshalb nicht benötigt. Mit den unterschiedlichen Außendurchmessern, die durch den nachfolgend beschriebenen Umformprozess präzise realisierbar sind, kann einbautechnischen Randbedingungen entsprochen werden. Die Wanddicken bzw. -stärken D_{I}, D_{II}, D_{III} sind an die jeweiligen, spezifischen Beanspruchungen angepasst. So ist die Wanddicke D_{III} des Flansch-Endbereichs III gegenüber den sonstigen Wanddicken D_{I}, D_{II} erheblich höher belassen, damit der Fertigflansch 2 bei seiner Kopplung im Antriebsstrang möglichst hohe Drehmomente aufnehmen kann. Ein Beispiel für die Wanddicken-Dimensionierung ist wie folgt: Di = 1,8mm; D_{II} = 1,5mm; D_{III} = D_{IV} = ca. 6mm

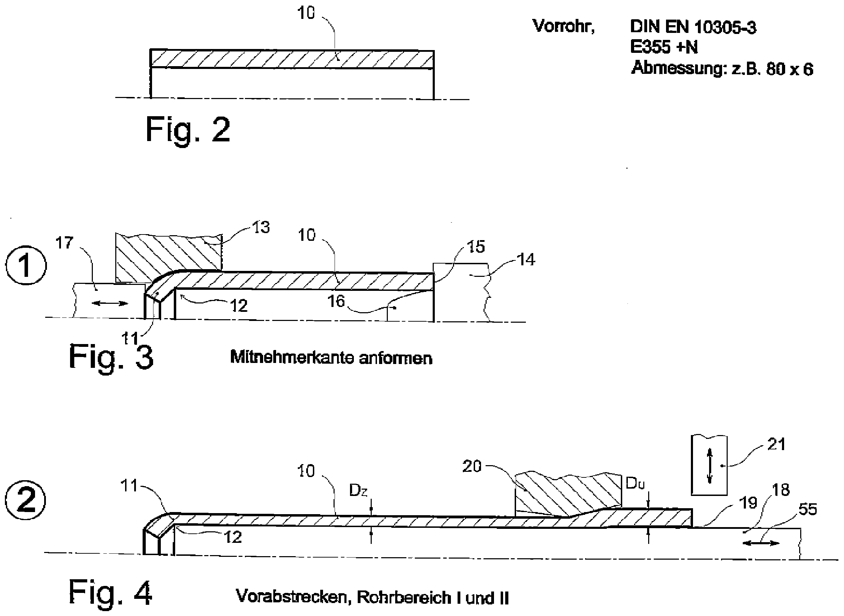

Gemäß Figur 1 weist der Flansch-Endabschnitt III den eigentlichen Fertigflansch 2 (mit der Wanddicke Div, mit Fertigflansch-Vorsprüngen 6 und mit Fertigflansch-Stummelabschnitten 8) sowie einen sich zum Mittelabschnitt II erstreckenden Übergangsabschnitt 9 mit der Wanddicke D_{III} auf. Zweckmäßig besitzt der Flansch-Übergangsabschnitt 9 dieselbe Wanddicke wie der sonstige Fertigflansch 2 bzw. dessen Teile 6, 8 (D_{III} = D_{IV}). Indem die Wanddicken der ersten Längsabschnitte I, II (außerhalb des Flanschendabschnitts III) bezogen auf die Rohr-Längserstreckung relativ dünn sind, wird ein Kardanrohr in Leichtbauweise erzielt. Das Kardanrohr 1 ist gegenüber dem Vorrohr 10 (vgl. Figur 2), welches den Ausgangspunkt für das erfindungsgemäße Herstellungsverfahren darstellt, um etwa das drei- bis vierfache verlängert, was auf das mehrmalige Abstrecken im Zuge der angewandten Kaltumformtechnik (siehe nachfolgende Beschreibung) zurückgeht. Aus dieser resultiert auch eine Kaltverfestigung und erhöhte Festigkeit insbesondere gegenüber Antriebskräften und -drehmomenten.

Bei dem in Figur 2 als Ausgangspunkt des erfindungsgemäßen Verfahrens angedeuteten zylindrischen Vorrohr 10 kann es sich um ein handelsübliches, längsgeschweißtes Präzisions-Stahlrohr in der Stahlgüte E355+N handeln (vgl. eingangs genannte Normen EN 10305-2 oder EN 10305-3). Die Zahl 355 gibt die Streckgrenze (355N/mm²) an, +N bedeutet, dass das Rohr nach dem Schweißen normalgeglüht wurde, um die beim Schweißen entstandenen Grobkornanteile im Kristallgefüge zu rekristallisieren und ein über den gesamten Querschnitt homogenes Kristallgefüge zu schaffen. Im Rahmen der Erfindung sind auch andere Stahlgüten nutzbar. Für das erfindungsgemäße Kardanrohr-Herstellungsverfahren geeignete Abmessungen sind zum Beispiel: Längenabschnitt = 80mm, Wanddicke = 6mm, Durchmesser beispielsweise 60 mm. Zwar handelt es sich bei den Präzisions-Stahlrohren nach der genannten Norm um unlegierte Stähle, jedoch könnten im Rahmen der Erfindung auch legierte Stähle Einsatz finden, sofern diese geeignete Umformgrenzen aufweisen.

Gemäß Figur 3 werden in einem ersten Herstellungsschritt an einem vom (späteren) Flanschbereich entfernten Rohrende Mitnehmermittel beispielsweise in Form einer Mitnehmerkante 11 gebildet, damit im späteren Herstellungsverfahren ein Anschlag für die weitere Handhabung beispielsweise durch einen Dorn zur Verfügung steht. Dieser kann sich dann in die von der Mitnehmerkante 11 und der angrenzenden Rohrinnenwandung gebildete Kehle 12 gleichsam eingraben und das Vorrohr in seiner Längsrichtung in ein Umformwerkzeug hineinschieben (siehe unten). Die Mitnehmerkante 11 wird mittels einer Formmatrize 13 mit einer zur Außenbiegung der Mitnehmerkante 11 komplementärer Kavität ausgeformt. Mit der Formmatrize 13 wirkt ein Stößel 14 zusammen, der mittels nicht gezeichneter Stellmittel gegen ein Rohr-Stirnende 15 gedrückt wird, das dem (später noch auszubildenden) Fertigflansch 2 zugeordnet ist. Zur Halterung und Zentrierung des Vorrohres 10 dient ein Zentrierzapfen 16, der vom Stößel 14 vorspringt und teilweise in das Rohrinnere hineinragt. Nach dem Ende des Verfahrensschritts "Mitnehmerkante anformen" wird der Stößel vom Rohr-Stirnende 15 wieder gelöst, und das Vorrohr 10 mit der Mitnehmerkante 11 ist zur Entfernung von der Formmatrize 13 freigegeben, Ein Ausstoßer 17 drückt dann dazu gegen das Stirnende der Mitnehmerkante 11 und stößt so das Vorrohr 10 aus der Formmatrize 13.

Im Verfahrensschritt gemäß Figur 4 geht es darum, die ursprüngliche Rohr-Wanddicke Dᵤ für den ersten Längs- bzw. Endabschnitt I und den zweiten Längs- bzw. Mittelabschnitt II der zu fertigenden Antriebshohlwelle 1 wesentlich zu reduzieren. Auch der Außen- und Innendurchmesser des Vorrohres 10 ist zumindest teilweise zu vermindern. Hierzu wird ein erster Dorn 18 einheitlichen Durchmessers in das Vorrohr 10 bis zum Anschlag an die Innenkehlung 12 der Mitnehmerkante 11 geschoben, wobei zunächst noch Spiel 19 zwischen der Rohrinnenwandung und dem Außenmantel des Dorns 18 besteht, was das Einschieben des Dorns 18 in das Rohrinnere ermöglicht. Dann wird ein erster Abstreckring 20 von der Mitnehmerkante 11 ausgehend über den Vorrohr-Außenmantel bis etwa zum Ende des Bereichs gezogen, welcher dem Ende des Mittelabschnitts II entspricht. Dabei wird das Stahlmaterial des Vorrohres 10 so auf den Außenmantel des ersten Dorns 18 gepresst, dass das Vorrohr 10 in den Vorabstreck-Abschnitten I, II den ersten Dorn 18 mit Vorspannung umgibt. Diese geht unter anderem auf eine Materialabkühlung zurück, die nach einer gewissen Materialerwärmung durch den per Kaltumformung erfolgten mechanischen Energieeintrag eintritt. Aufgrund der geltenden Volumenkonstanz zwischen Vorrohr 10 und dem Endprodukt AntriebsHohlwelle 1 ergibt sich eine Rohr-Verlängerung entsprechend der im Vorabstreckschritt vorgenommenen Wanddicken-Reduzierung von der ursprünglichen Wanddicke Dᵤ auf die Zwischenwanddicke D_{z}. Zur Beendigung des Vorabstreckens werden Abstreifmittel 21 zum Anschlag für das dem (späteren) Fertigflansch 2 zugeordnete Rohr-Stirnende positioniert, und der Dorn wird unter Überwindung des Reibschlusses zwischen Rohrinnenwandung und Dorn-Außenmantel herausgezogen. Dabei kann eine Abstreifkraft von etwa 20 Tonnen zwischen dem Rohr-Stirnende und der Anschlagfläche des Abstreifmittels 21 auftreten.

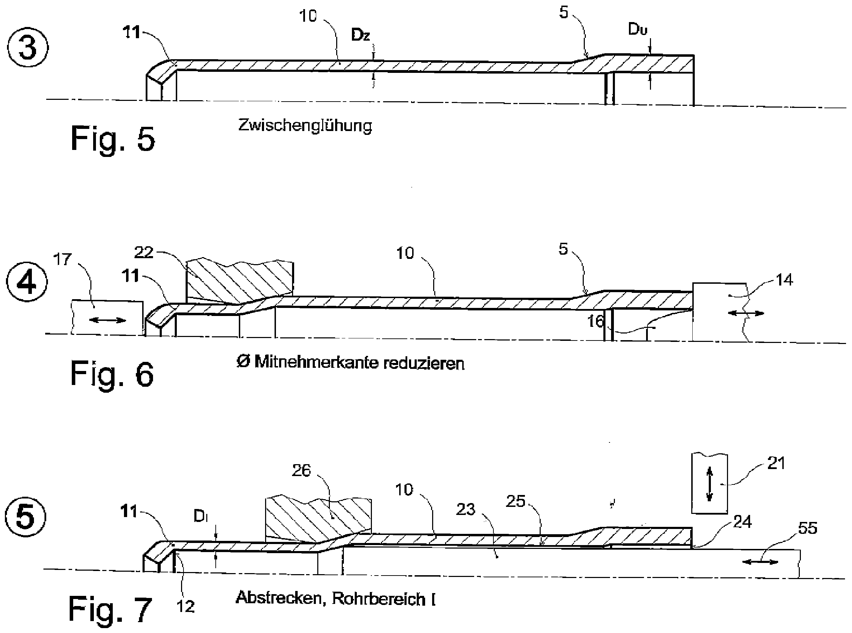

In Figur 5 ist die Gestaltung des Rohr-Zwischenprodukts dargestellt, wie sie sich nach dem Vorabstreck-Schritt ergibt. Zur Kompensation der bei dieser Kaltreduzierung der Wanddicke eintretenden Kaltverfestigung wird als weiterer Herstellungsschritt ein Zwischenglühen (Rekristallisationsglühen) durchgeführt, um im Rohrwerkstoff den ursprünglichen Gefügezustand bzw. Anlieferzustand wieder herzustellen, Dadurch werden nachfolgende, weitere Kaltumformschritte ermöglicht bzw. zu erleichtert.

Gemäß Figur 6 wird die Mitnehmerkante 11 und der angrenzende Bereich im jeweiligen Durchmesser reduziert. Dazu wird das Vorrohr 10 mittels des Stößels 14 mit eintauchendem Zentrierzapfen 16 ("Stoßdorn") in eine zweite, ringförmige Formmatrize 22 hinein und durch diese hindurch gedrückt, welche die für das Einziehen des Vorrohres 10 im Bereich seiner Mitnehmerkante 11 notwendigen Formelemente (komplementäre Kavität, reduzierter Innendurchmesser) aufweist. Die Geräte- und Werkzeuganordnung ist der beim ersten Verfahrensschritt "Mitnehmerkante anformen" gemäß Figur 3 ähnlich. Jedoch resultiert bei dem Verfahrensschritt gemäß Figur 6 keine Kanten-Umbiegung, sondern eine Reduzierung im Innen- und Außendurchmesser der Mitnehmerkante 11 und des daran unmittelbar angrenzenden Bereichs ("Rohr einziehen"). Bei Beendigung dieses Verfahrensschritts wird mittels des Ausstoßers 17, analog zum Verfahrensschritt nach Figur 3, das Vorrohr 10 aus der zweiten Formmatrize 22 mittels axialen Drucks herausgedrückt, nachdem vorher der Stößel 14 entfernt worden war.

Gemäß Figur 7 erfolgt das Abstrecken des ersten Längs- bzw. Endabschnitts I des Vorrohres 10. Dazu wird zunächst ein zweiter, zweistufiger Dorn 23 mit seinem kleineren Außendurchmesser vorneweg bis zum Anschlag an die Mitnehmerkante 11 in das Vorrohr 10 eingeführt, wobei noch vor Einsetzen des Abstreckens Spiel 24, 25 zwischen dem Außenmantel des zweiten Dorns 23 und der Innenwandung des Vorrohres 10 vorherrscht. Bei dem Rohrbereich, welcher dem ersten Längs- bzw. Endabschnitt I zugeordnet ist (vgl. Figur 1), wird das Spiel zwischen der Rohr-Innenwandung und dem Dorn-Außenmantel mittels eines zweiten Abstreckrings 26 beseitigt, analog zum Vorabstreckschritt gemäß Figur 4. Dies erfolgt bis zur ersten Übergangs-Durchmessererweiterung 3. Dabei ergibt sich für den ersten Endabschnitt I die vorbestimmte Zielwandstärke D_{I}, die beispielsweise 1,8 Millimeter betragen kann (vgl. Figur 1).

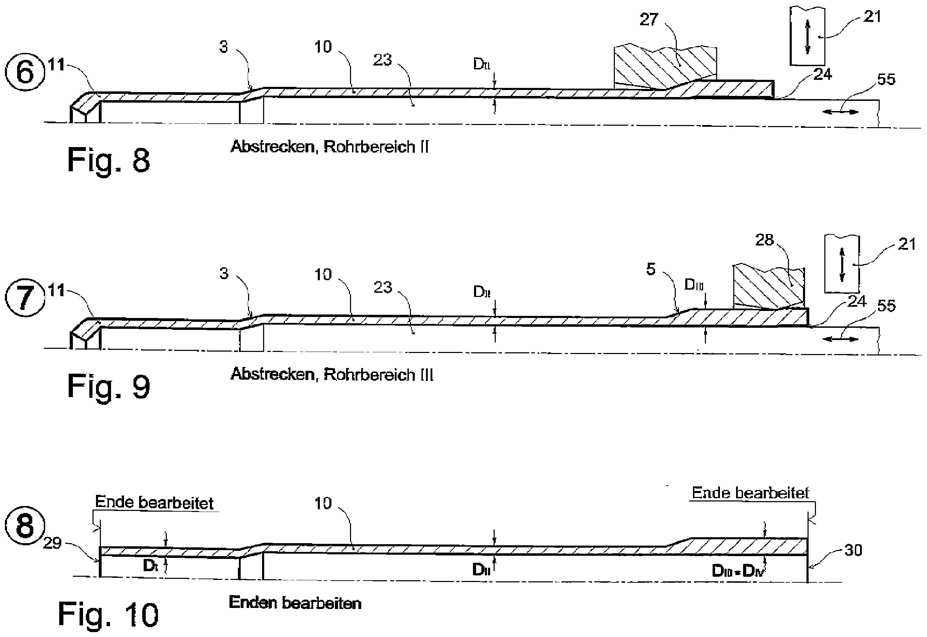

Für das Abstrecken des Rohr-Mittelabschnitts II gemäß Figur 8 wird der zweite, zweistufige Dorn 23 im Vorrohr 10 belassen. Mittels eines weiteren, dritten Abstreckrings 27 größeren Innendurchmessers wird das bisher zwischen der Rohrinnenwandung und dem Dornaußenmantel vorhandene Spiel 25 (vgl. Figur 7) durch Kaltumformung beseitigt (analog den vorausgegangenen Abstreckschritten). Dies erfolgt bis zur zweiten Übergangs-Durchmessererweiterung 5.

Gemäß Figur 9 wird zum Abstrecken des dritten Rohr-Längsabschnitts III (dem Flansch zugeordneter Endabschnitt) der zweistufige Dorn 23 wiederum im Rohrinneren belassen. Jedoch findet ein weiterer, vierter Abstreckring 28 mit einem Innendurchmesser Anwendung, der an den RohrAußendurchmesser des an den (späteren) Fertigflansch 2 angrenzenden Rohrbereichs sowie an die Wanddicken D_{III} des Flansch-Übergangsabschnitts 9 und Div des eigentlichen Fertigflansches 2 angepasst ist. Diese letzte Abstreckoperation bewirkt im Vergleich zu den vorherigen Abstreckschritten den geringsten Umformgrad und soll letztendlich nur dazu dienen, für präzise, einheitliche Wanddicken D_{III}, D_{IV} im Flanschbereich zu sorgen, um dort die mechanische Stabilität zu maximieren.

Gemäß Figur 10 findet nach Beendigung der Abstreckschritte eine Bearbeitung der beiden Rohrenden 29, 30 statt. Dies kann beispielsweise eine spanende Bearbeitung mittels Drehmaschine oder dergleichen sein, wobei die noch in Figur 9 gezeichnete Mitnehmerkante 11 entfernt wird. Ziel der Endbearbeitung ist es unter anderem, eine Entgratung der Endkanten sowie eine plane Gestaltung der Rohr-Stirnenden zu erreichen.

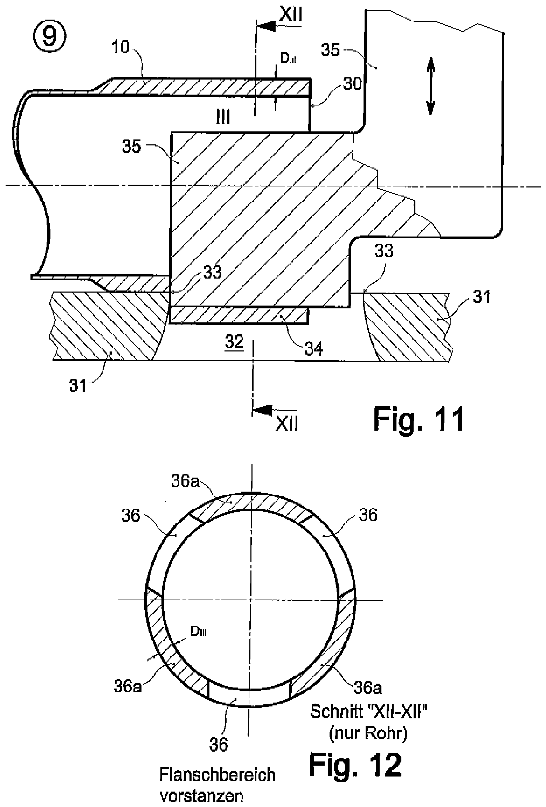

Gemäß Figuren 11 und 12 findet im Weiteren eine Vorstanzoperation am dem Fertigflansch 2 zugeordneten Rohrende 30 statt. Das festgehaltene Vorrohr 10 liegt an einer Schneidmatrize 31 an, welche von einem fensterartigen Schneiddurchgang 32 durchsetzt ist. Dieser ist von scharfen Schneidkanten 33 begrenzt. Um ein Wandungsabfallteil 34 aus dem Flansch-Endabschnitt III des Vorrohres 10 herauszustanzen, fährt ein gekröpfter Schneidstempel 35 längs einer ersten, beispielsweise linearen Bewegungsrichtung an das Rohrende 30 heran und dann längs einer dazu orthogonalen Bewegungsrichtung in das Rohrende hinein. Mit einer weiteren, den Stanzvorgang auslösenden Bewegung in radialer Richtung wird das Wandungsabfallteil 34 anhand der scharfen Schneidkanten 33 von der sonstigen Rohrwandung abgetrennt, so dass es durch den Schneiddurchgang 32 abfallen kann.

Gemäß Figur 12 erfolgt dieser Stanzvorgang dreimal hintereinander oder gleichzeitig. Dies könnte entweder über eine Drehung des Vorrohres oder mittels eines (nicht gezeichneten) Dreierstempels realisiert werden. Der Dreierstempel würde zum gleichzeitigen Ausstanzen dreier Wandungsteile angesteuert, um drei Schneidstempel 35 auszufahren, die bezüglich der Rohr-Umfangsrichtung um 120° zueinander versetzt liegen. Damit könnten in einem Arbeitsgang drei Wandungsabfallteile 34 über den Rohrumfang beispielsweise um jeweils 120° zueinander versetzt, aber gleichzeitig ausgestanzt werden. Der Querschnitt des resultierenden Rohrendes mit drei über den Rohrumfang gleichmäßig verteilt liegenden Rohrlücken 36 zwischen den vorgestanzten Rohflansch-Vorsprüngen 36a ist in Figur 12 dargestellt. Die stirnseitigen, achsparallelen Rohrlücken 36 dienen der Schwächung des Materialwiderstands, um bei der nachfolgenden Flanschausformung mittels Kaltbiegen eine Material-Überbeanspruchung, insbesondere der Außenfasern des Werkstoffs, zu vermeiden.

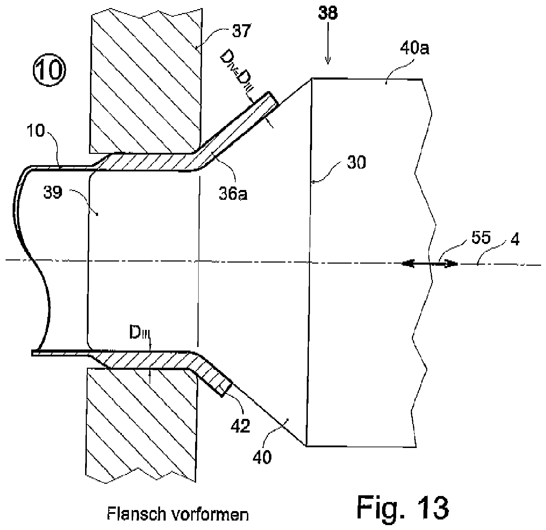

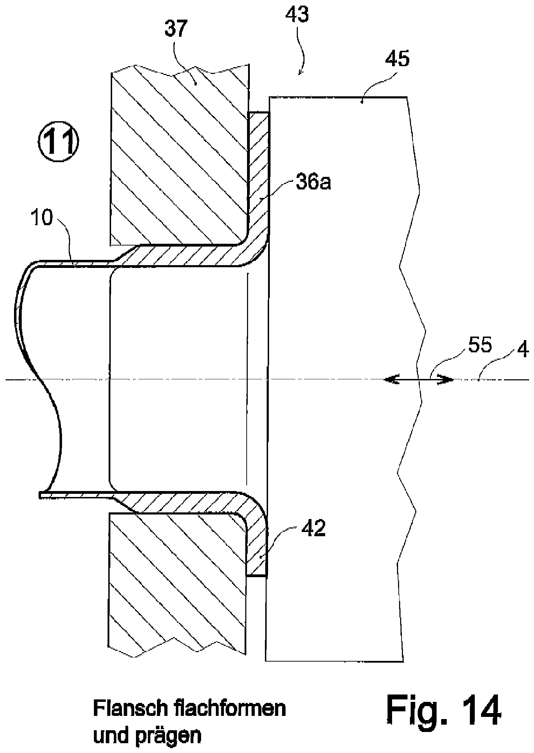

Gemäß Figuren 13 und 14 lässt sich der Prozess der Flanschausformung in einen Vorform-Schritt (Figur 13) und einen Flachform-Schritt (Figur 14) unterteilen.

Gemäß Figur 13 ist im Vorform-Schritt das Vorrohr 10 in seinem Flanschbereich bzw. innerhalb des Flansch-Endabschnitts III von einer ringförmigen Haltematrize 37 umfasst. In das Innere des Rohrendes 30 ist ein teilweise kegelförmiger Biegestempel 38 mit seinem kreiszylindrischen Zentrierende 39 vorneweg eingeführt. Die Umbiegung des Rohrendes 30 in eine zur Rohrmittelachse 4 schrägwinklige Stellung erfolgt mittels des sich kegelförmig erweiternden bzw. verjüngenden Kegelabschnitts 40, der das Zentrierende 39 mit einem (abgebrochen gezeichneten) kreiszylindrischen Stempelschaft 40a des Biegestempels 38 verbindet. Im Zuge des Einführens des Biegestempels 38 in das Rohrende 30 unter axialem Druck werden die an den Biegestempel-Kegelabschnitt 40 anliegenden Rohrwandungs-Endbereiche in die genannte Schrägstellung gegenüber der Mittelachse 4 verstellt. Dies gilt nicht nur für die im Abstand voneinander vorspringenden Rohflanschstücke 36a, welche die Rohrlücken 36 begrenzen und später die Fertigflansch-Vorsprünge 6 bilden (vgl. Figuren 1 und 16), sondern auch für dazwischen stirnseitig angeordnete, die Rohflansch-Vorsprünge 36a verbindende Rohflansch-Stummelabschnitte 42, welche jeweils die rückseitigen Begrenzungen der Rohrlücken 36 sind. Zweckmäßig weist der Kegelabschnitt 40 des Biegestempels 38 gegenüber der Mittelachse 4 einen schrägwinkligen Verlauf von etwa 45° auf.

Gemäß Figur 14 schließt sich der Herstellungsschritt "Flansch flachformen und prägen" an. Dem dient ein Biege- und Prägestempel 43 mit einem als Stirnende vorspringenden, etwa kreiszylindrischen Zentrierende 44. Seine Außenwandung bildet mit der sich direkt anschließenden, radialen (abgebrochen gezeichneten) Prägeerweiterung 45 eine rechtwinklige Gestaltungskontur, worüber das stirnseitig vom Rohr- bzw. Wellenende vorspringende Rohflanschstück 36a sowie der dem gegenüber wesentlich kürzere Stummelabschnitt 42 in eine bezüglich der Mittelachse 4 radial bzw. rechtwinklig abstehende Stellung gebogen wird. Gleichzeitig übt der Biege- und Prägestempel 43 über seine radiale Prägeerweiterung 45 einen hohen, bis an die Material-Fließgrenze reichenden Druck auf das an der Matrize 37 anliegende Rohrmaterial aus, was einem Prägen entspricht. Durch die mit dem Flachformen kombinierte Prägekomponente lässt sich für die Flansch-Stirnseite eine ebene Form verwirklichen. Durch das platt eben Drücken wird die Geometrie der Flansch-Stirnseite eindeutig bestimmt. Gegebenenfalls lässt sich im Zuge des Prägens in die Flansch-Stirnseite eine beispielsweise radial verlaufende Sicke einformen, welche der Flansch-Stabilisierung und -verstärkung insbesondere zur Aufnahme von Drehmomenten dient. Für die Arbeitsgänge "Flansch vorformen" (Figur 13) und "Flansch flachformen und prägen" (Figur 14) kann zweckmäßig dieselbe Matrize 37 als Gegenhalt Verwendung finden.

Gemäß Figur 15 sind zur Bildung des fertigen Flansches 2 die Rohflansch-Vorsprünge 36a und die Rohflansch-Stummelabschnitte 42 jeweils an ihren äußeren Rändern zu beschneiden. Ferner sind die Rohflansch-Vorsprünge 36a mit den Schraublöchern 7 gemäß Figur 1, 16 und 17 zu versehen. Dem dient eine Beschneideinrichtung 46, die eine oder mehrere, das Vorrohr 10 umfassende und den Rohflansch 36a, 42 hintergreifende Schneid- und Lochmatrizen 47 und eine oder mehrerere, dieser gegenüber bezüglich der Rohrmittelachse 4 axial verfahrbare, gegenüberliegende Stempeleinrichtungen 48 umfasst. Die (jeweilige) Schneid- und Lochmatrize 47 ist zum einen mit einem von scharfen Schneidkanten begrenzten Schneidfenster 49 gestaltet, dessen Umriss sich mit dem auszustanzenden Schraubloch 7 gemäß Figuren 1, 16 und 17 deckt. Ferner sind bei der Schneid- und Lochmatrize 47 deren Außenecken als eine oder mehrere, erste Schneidkanten 50a und eine oder mehrere, zweite Schneidkanten 50b ausgebildet. Die ersten Schneidkanten 50a weisen gegenüber der Rohrmittelachse 4 den größeren Abstand Aₐ, entsprechend dem weiteren Abstehen des Rohflansch-Vorsprungs 36a, und die zweiten Schneidkanten 50b gegenüber der Rohrmittelachse 4 den kürzeren Abstand A_{b} auf, entsprechend dem geringeren Abstehen der Rohflansch-Stummelabschnitte 42 gegenüber der Rohrmittelachse 4. Infolgedessen sind die Schneid- und Lochmatrize(n) 47 sowie (wie nachstehend erläutert) die Stempeleinrichtung(en) 48 und insgesamt die Beschneideinrichtung 46 mit einer gegenüber einer (gedachten) Rohrmittelachse 4 asymmetrischen Struktur aufgebaut. So ist die (jeweilige) Stempeleinrichtung 48 in analoger Weise mit einem oder mehreren ersten Beschneidstempeln 51a und einem oder mehreren zweiten Beschneidstempeln 51b ausgestattet, die an einem gemeinsamen Rückjoch 52 angebracht, vorzugsweise daran starr fixiert, und über dieses miteinander verbunden sind. Der oder die ersten Beschneidstempel 51a weisen zur Rohrmittelachse 4 jeweils den größeren Abstand Bₐ (übereinstimmend mit dem oder den größeren Schneidkantenabständen Aₐ), und der oder die zweiten Beschneidstempel 51b jeweils den kleineren Abstand B_{b} (entsprechend dem kleineren Schneidkantenabstand A_{b}) zur Rohrmittelachse 4 auf. Deckungsgleich bzw. kongruent mit dem Schneidfenster 49 springt vom Rückjoch 52 ein Lochstempel 53 vor, so dass er das Schneidfenster 49 mit dessen Schneidkanten zusammenwirkend durchsetzen kann. Ferner sind in der Beschneideinrichtung 46 ein oder mehrere (teilweise geschnitten gezeichnete) Niederhalter 54 mit jeweils stirnseitigen Zentrieransätzen 54a angeordnet, die über ein oder mehrere, parallele Federelemente 55 gegen das Rückjoch 52 oder eine daran parallel angebrachte Innenleiste 56 elastisch federnd abgeschützt sind.

Die Wirkungsweise der Beschneideinrichtung 46 ist wie folgt: Ihr kann eine axiale Hin- und Her-Verfahrbewegung 57 erteilt werden. Im Zuge einer Annäherung an den Rohflansch 36a, 42 des Vorrohres 10 kommt an dessen Stirnseite der (jeweilige) Niederhalter 54 zur Anlage, wobei er aufgrund der rückwärtig abgestützten Federelemente 55 gegen die Rohflansch-Stirnseite gedrückt wird. Mit weiterer Verfahrbewegung 57 des Rückjochs 52 mit Innenleiste 56 zum Vorrohr 10 stoßen die Beschneidstempel 51a, 51b an die Außenränder der Rohflansch-Vorsprünge 36a und der Rohflansch-Stummelabschnitte 42. Im Zusammenwirken mit den Schneidkanten 50a, 50b der Schneid- und Lochmatrize 47 werden Rand-Abfallstücke 58a, 58b vom jeweiligen Außenrand der Rohflansch-Vorsprünge 36a bzw. der Rohflansch-Stummelabschnitte 42 abgetrennt. Gleichzeitig werden mittels des oder der Lochstempel 53 ein oder mehrere Wandungs-Abfallstücke 59 aus den Wandungen der jeweiligen Rohflansch-Vorsprünge 36a herausgestochen, wobei die fertigen Schraublöcher 7 entstehen.

In der Stirnansicht gemäß Figur 16 ist der fertig ausgeformte Flansch 2 dargestellt, der die beispielsweise drei fertigen Flanschvorsprünge 6 mit beispielsweise 120 Grad-Aufteilung und mit jeweils dort mittig angeordneten Schraublöchern 7 aufweist. Diese besitzen in Rohrumfangsrichtung jeweils einen Abstand entsprechend einem Umfangswinkel von 120°. Die Flansch-Vorsprünge 6 sind miteinander über die (fertig beschnittenen) Flansch-Stummelabschnitte 8 verbunden, welche gemäß Figuren 1 und 17 einen radialen Überstand 60 gegenüber dem angrenzenden Außenmantel bilden und der Stabilisierung des Flanschbereichs dienen.

Gemäß Figur 17 kann das Kardanrohr bzw. die AntriebsHohlwelle 1 auch nur zwei unterschiedliche Wandstärken aufweisen, nämlich die niedrigere beim Rohrabschnitt bis zum Flanschbereich und die höhere im Flansch-Übergangsabschnitt 9 und im Flansch 2 selbst.

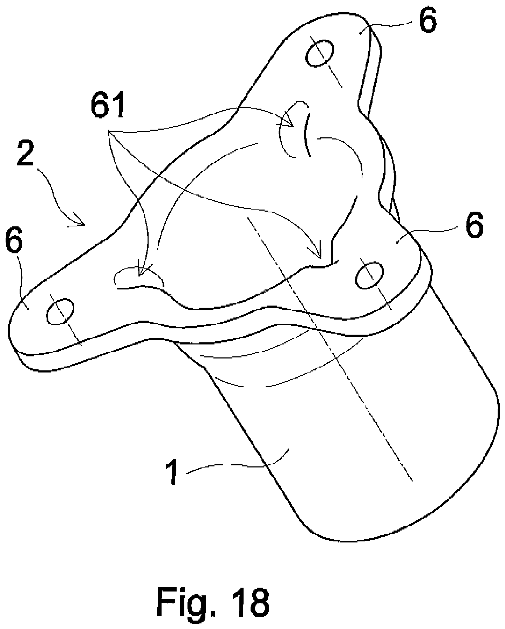

Gemäß Figur 18 ist jedem der drei Flanschvorsprünge 6 eine Versteifungsrippe 61 zugeordnet. Im konkreten Ausführungsbeispiel ist diese Versteifungsrippe als eine Vertiefung in dem Bereich der Innenwandung ausgeführt, wo die Rohrform über eine 90°-Umbiegung in einen Flanschvorsprung 6 übergeht. Entsprechend durchläuft die Vertiefung zur Bildung der Versteifungsrippe 61 jeweils etwa einen 90°-Winkel.

### Bezugszeichenliste

- 1: Kardanrohr bzw. Antriebshohlwelle
- I: erster Längsabschnitt
- II: zweiter Längsabschnitt, Mittelabschnitt
- III: dritter Längsabschnitt, Flansch-Endabschnitt
- D_{I}, D_{II}: Wanddicken
- D_{III}, D_{IV}: Wanddicken
- 2: Fertigflansch
- 3: Übergangs-Durchmessererweiterung
- 4: Rohrmittelachse
- 5: zweite Übergangs-Durchmessererweiterung
- 6: Fertigflansch-Vorsprung
- 7: Schraubloch
- 8: Fertigflansch-Stummelabschnitt
- 9: Flansch-Übergangsabschnitt
- 10: Vorrohr
- 11: Mitnehmerkante
- 12: Kehle
- 13: ringförmige Formmatrize
- 14: Stößel
- 15: Stirnende
- 16: Zentrierzapfen
- 17: Ausstoßer
- Dᵤ: ursprüngliche Wanddicke
- 18: erster Dorn
- 19: Spiel
- 20: Erster Abstreckring
- D_{z}: Zwischenwanddicke
- 21: Abstreifer
- 22: zweite ringförmige Formmatrize
- 23: zweiter, zweistufiger Dorn
- 24, 25: Spiel
- 26: zweiter Abstreckring
- 27: dritter Abstreckring
- 28: vierter Abstreckring
- 29, 30: Rohrenden
- 31: Schneidmatrize
- 32: Schneiddurchgang
- 33: Schneidkante
- 34: Wandungsabfallteil
- 35: Schneidstempel
- 36: Rohrlücke
- 36a: Rohflansch-Vorsprung
- 37: Haltematrize
- 38: kegelförmiger Biegestempel
- 39: Zentrierende
- 40: Kegelabschnitt
- 40a: Stempelschaft
- 41: nicht besetzt
- 42: Rohflansch-Stummelabschnitt
- 43: Biege- und Prägestempel
- 44: dessen Zentrierende
- 45: radiale Prägeerweiterung
- 46: Beschneideinrichtung
- 47: Schneid- und Lochmatrize
- 48: Stempeleinrichtung
- 49: Schneidfenster
- 50a: erste Schneidkante
- 50b: zweite Schneidkante
- Aₐ: größerer Abstand der ersten Schneidkante
- A_{b}: kleinerer Abstand der zweiten Schneidkante
- 51ₐ: erster Beschneidstempel
- 51_{b}: zweiter Beschneidstempel
- 52: Rückjoch
- Bₐ: größerer Abstand des ersten Beschneidstempels
- B_{b}: kleinerer Abstand des zweiten Beschneidstempels
- 53: Lochstempel
- 54: Niederhalter
- 54a: Zentrieransatz
- 55: Federelemente
- 56: Innenleiste
- 57: Verfahrbewegung
- 58ₐ: Rand-Abfallstück
- 58_{b}: Rand-Abfallstück
- 59: Wandungs-Abfallstück
- 60: Überstand
- 61: Versteifungsrippe
- 60: Überstand
- 61: Versteifungsrippe

## Patentansprüche

1. Verfahren zur Herstellung einer rohrartigen, hohlen Antriebswelle (1), insbesondere Kardanwelle, aus einem Vorrohr (10), insbesondere einem längsgeschweißten, normalgeglühten Stahlrohr, das verlängert wird, indem es zumindest teilweise mittels ein- oder mehrmaligen Abstreckens oder anderer Kaltumformung in seiner Wandstärke beziehungsweise -dicke reduziert und/oder in seinem Innen- und/oder Außendurchmesser verändert wird, **dadurch gekennzeichnet, dass** wenigstens ein Vorrohrende (30) beziehungsweise Wellenende mittels Kaltumformung zu einem einstückig integrierten Flansch (2) gestaltet wird, wobei der dem Flansch (2) nicht zugehörige und/oder nicht benachbarte Teil (I,II) des Vorrohres (10) derart abgestreckt oder sonst im Wege der Kaltumformung verändert wird, dass der dem Flansch zugehörige Teil (III, 2) und benachbarte Teil (III, 9) der Antriebswelle (1) die höchsten Wanddicken (DIII,DIV) aufweisen.

2. Verfahren nach Anspruch 1, **dadurch gekennzeichnet, dass** die Kaltumformung des Vorrohr- beziehungsweise Wellenendes (30) zum Flansch (2) dessen ein- oder mehrmaliges Abstrecken sowie dessen nachfolgendes Biegen umfasst.

3. Verfahren nach Anspruch 1 oder 2, wobei, im Zuge der Flanschausbildung, in einem Vorform-Schritt die Wandung am Ende (30) des Vorrohres (10) mit einem zumindest teilweise kegelartigen Biegestempel (38) in eine gegenüber der Rohrmittelachse (4) schrägwinklige Stellung versetzt, und in einem nachfolgenden Flachform-Schritt die schräg gestellte Wandung mit einem rechtwinkligen Biegestempel (43) in eine gegenüber der Rohrmittelachse rechtwinklige Stellung versetzt werden, **dadurch gekennzeichnet, dass** die Biegestempel (38, 43) bei der Flanschausbildung ausschließlich geradlinig bewegt (55) werden.

4. Verfahren nach Anspruch 1, 2, oder 3, wobei, im Zuge der Flanschausbildung, in einem Vorform-Schritt die Wandung am Ende (30) des Vorrohres (10) mit einem zumindest teilweise kegelartigen Biegestempel (38) in eine gegenüber der Rohrmittelachse (4) schrägwinklige Stellung versetzt, und in einem nachfolgenden Flachform-Schritt die schräg gestellte Wandung mit einem rechtwinkligen Biegestempel (43) in eine gegenüber der Rohrmittelachse rechtwinklige Stellung versetzt werden, **dadurch gekennzeichnet, dass** im Flachform-Schritt die Stirnseite des Flansches (2) mittels des rechtwinkligen Biegestempels (43) vorzugsweise unter Bildung einer Sicke oder Versteifungsrippe (61) geprägt wird.

5. Verfahren nach einem der vorangehenden Ansprüche, **dadurch gekennzeichnet, dass** vor der Flanschausbildung am zugeordneten dieser Vorrohr- beziehungsweise Wellenende (30) ein oder mehrere Wandungsteile (34) ausgestanzt oder sonst abgetrennt werden.

6. Verfahren nach einem der vorangehenden Ansprüche, **gekennzeichnet durch** ein Vorabstrecken von einem oder mehreren Rohrabschnitten (I,II), die jeweils von dem Rohrendbereich (III, 9) beabstandet sind, der dem Flansch (2) zugeordnet ist, wobei eine Reduzierung der jeweiligen Wanddicke (D) und/oder eine Verengung und/oder Aufweitung des jeweiligen Innen- und/oder Außendurchmessers erfolgen.

7. Verfahren nach Anspruch 6, **gekennzeichnet durch** einen sich an das Vorabstrecken anschließenden Zwischenglüh-Schritt des Vorrohres (10).

8. Verfahren nach einem der vorangehenden Ansprüche, **gekennzeichnet durch** ein Abstrecken oder sonstiges Kaltverformen eines dem Flansch (2) nicht zugeordneten Endabschnitts (I) des Vorrohres (10), wobei wenigstens eine Reduzierung des Außen- und/oder Innendurchmessers des Vorrohres und/oder der Wanddicke (D_{I}) des Vorrohres mit einem spezifisch dafür ausgebildeten Umformwerkzeug (26) erfolgt.

9. Verfahren nach einem der vorangehenden Ansprüche, **gekennzeichnet durch** Abstrecken oder sonstige Kaltumformung mindestens eines dem Flansch (2) nicht zugeordneten, zwischen den Rohrenden (29,30) gelegenen Mittelabschnitts (II) des Vorrohres (10), wobei wenigstens eine Reduzierung des Außen- und/oder Innendurchmessers des Vorrohres und/oder von dessen Wanddicke (D_{II}) mit einem spezifisch dafür ausgebildeten Umformwerkzeug (27) erfolgt.

10. Verfahren nach einem der vorangehenden Ansprüche, **gekennzeichnet durch** ein Abstrecken oder sonstiges Kaltverformen eines dem Flansch (2) zugeordneten Flansch-Endabschnitts (III) des Vorrohres, wobei wenigstens eine Reduzierung des Außen-und/oder Innendurchmessers des Vorrohres und/oder der Wanddicke (D_{III}) des Vorrohres (10) mit einem spezifisch dafür ausgebildeten Umformwerkzeug (28) erfolgt, und der Außen- und/oder Innendurchmesser des Flansch-Endabschnitts (III) und/oder dessen Wanddicke (D_{III}) im Vergleich zu dem oder den sonstigen Vorrohr-Abschnitten (I,II) am wenigstens reduziert werden.

11. Hohle Antriebswelle, insbesondere Kardanrohr, welche beziehungsweise welches im Wege des Abstreckens und/oder einer sonstigen Kaltumformung verfestigt und dabei mit über seine Längserstreckung unterschiedlichen Wanddicken (D_{I},D_{II},D_{III}) und/oder unterschiedlichen Innen- und/oder Außendurchmessern versehen ist, insbesondere hergestellt durch das Verfahren nach einem der vorangehenden Ansprüche, **gekennzeichnet durch** einen an wenigstens einem Ende (30) mittels Kaltumformung integral und/oder einstückig angeformten, kaltverfestigten Flansch, wobei der Flansch (2), und ein unmittelbar daran angrenzender Rohr- oder Wellenabschnitt (9), mit einer höheren Dicke (D_{III}) hergestellt sind als der oder die sonstigen Wellen- oder oder Rohrabschnitte (I,II).

12. Antriebswelle nach Anspruch 11, **dadurch gekennzeichnet, dass** der Flansch (2), eventuell auch ein unmittelbar daran angrenzender Rohr- oder Wellenabschnitt (9), mit einem größeren Durchmesser hergestellt sind als der oder die sonstigen Wellen- oder Rohrabschnitte (I,II).

13. Antriebswelle nach einem der vorangehenden Ansprüche, **dadurch gekennzeichnet, dass** der dem Flansch (2) nicht zugehörige und/oder nicht benachbarte Wellen- beziehungsweise Rohrteil wenigstens in einen mittleren Abschnitt (II) und einen vom Flansch entfernten Endabschnitt (I) untergliedert ist, und die genannten Abschnitte unterschiedliche Wanddicken (D_{I},D_{II}) und/oder unterschiedliche Innen- und/oder Außendurchmesser aufweisen.

14. Antriebswelle nach einem der vorangehenden Ansprüche, **dadurch gekennzeichnet, dass** der Flansch (2) mit vom Rohr- beziehungsweise Wellenende (30) vorspringenden Teilstücken (6; 41) gebildet ist, die voneinander in oder parallel zur Rohr-Umfangsrichtung verlaufende Abstände aufweisen.

15. Antriebswelle nach Anspruch 14, **dadurch gekennzeichnet, dass** die vorspringenden Teilstücke (6; 41) über vorzugsweise nach außen winklig abstehende, vorzugsweise kreisbogenartige Flanschstummel-Abschnitte (42) am Wellenende (30) verbunden sind.

## Claims

1. A method for producing a tubular, hollow drive shaft (1), which is a cardan shaft, from a pre-tube (10), in particular a longitudinally welded, normalised steel tube, by the wall strength and/or thickness being reduced at least partially by means of single or multiple ironing or other cold forming operation and/or by the inner diameter or outer diameter thereof being changed, **characterised in that** at least one pre-tube end (30) or shaft end is configured into a flange (2) integrated in one piece by means of cold forming, wherein the portion (I, II) of the pre-tube (10) not associated with the flange (2) and/or not adjacent thereto is ironed or changed by way of cold forming such that the portion of the drive shaft (1) associated (III, 2) with the flange and adjacent (III, 9) to the flange have the wall thicknesses (Dill, DIV).

2. The method according to claim 1, **characterised in that** the cold forming operation of the pre-tube or shaft end (30) to obtain the flange (2) includes single or multiple ironing operations and subsequent bending thereof.

3. The method according to claim 1 or 2, wherein, as part of the formation of the flange, in a pre-forming step the wall at the end (30) of the pre-tube (10) is given an angled position with respect to the tube centre axis (4) by way of an at least partially conical bending punch (38), and in a subsequent flat forming step the obliquely positioned wall is given a perpendicular position with respect to the tube centre axis by way of an orthogonal bending punch (43), **characterised in that** the bending punches (38, 43) are moved (55) exclusively in a rectilinear manner during the formation of the flange.

4. The method according to claim 1, 2, or 3, wherein, as part of the formation of the flange, in a pre-forming step the wall at the end (30) of the pre-tube (10) is given an angled position with respect to the tube centre axis (4) by way of an at least partially conical bending punch (38), and in a subsequent flat forming step the obliquely positioned wall is given a perpendicular position with respect to the tube centre axis by way of an orthogonal bending punch (43), **characterised in that**, during the flat forming step, the end face of the flange (2) is embossed by means of the orthogonal bending punch (43), preferably forming a corrugation or a reinforcement rib (61).

5. The method according to one of the preceding claims, **characterised in that** one or more wall portions (34) are punched out or otherwise separated therefrom at the associated pre-tube or shaft end (30), prior to formation of the flange.

6. The method according to one of the preceding claims, **characterised by** a preliminary ironing operation of one or more tube sections (I, II), in each case spaced apart from the tube end region (III, 9) associated with the flange (2), wherein a reduction of the respective wall thickness (D) and/or a narrowing and/or expansion of the respective inner and/or outer diameters are carried out.

7. The method according to claim 6, **characterised by** an intermediate annealing step of the pre-tube (10) following the preliminary ironing operation.

8. The method according to one of the preceding claims, **characterised by** an ironing operation, or another cold forming operation, of an end section (I) of the pre-tube (10) not associated with the flange (2), wherein at least a reduction of the outer diameter and/or inner diameter of the pre-tube and/or of the wall thickness (D_{I}) of the pre-tube is carried out using a forming tool (26) specifically designed for this purpose.

9. The method according to one of the preceding claims, **characterised by** an ironing operation, or another cold forming operation, of at least one centre section (II) of the pre-tube (10) not associated with the flange (2) and located between the tube ends (29, 30), wherein at least a reduction of the outer diameter and/or inner diameter of the pre-tube and/or of the wall thickness (D_{II}) thereof is carried out using a forming tool (27) specifically designed for this purpose.

10. The method according to one of the preceding claims, **characterised by** an ironing operation, or another cold forming operation, of a flange end section (III) of the pre-tube associated with the flange (2), wherein at least a reduction of the outer diameter and/or inner diameter of the pre-tube and/or of the wall thickness (D_{III}) of the pre-tube (10) is carried out using a forming tool (28) specifically designed for this purpose, and the outer diameter and/or inner diameter of the flange end section (III) and/or the wall thickness (D_{III}) thereof are at least reduced compared with the other pre-tube section or sections (I, II).

11. A hollow drive shaft, in particular a cardan shaft, which is hardened by way of ironing and/or another cold forming operation and in so doing is provided with differing wall thicknesses (D_{I}, D_{II}, D_{III}) and/or differing inner diameters and/or outer diameters across the longitudinal extension thereof, in particular produced by the method according to one of the preceding claims, **characterised by** a strain-hardened flange formed integrally and/or in one piece at at least one end (30) by way of cold forming, wherein the flange (2) and a tube or shaft section (9) directly abutting same are produced with a greater thickness (D_{III}) than the remaining shaft or tube section(s) (I, II).

12. The drive shaft according to claim 11, **characterised in that** the flange (2), and possibly also a tube or shaft section (9) directly abutting same, are produced with a greater diameter than the remaining shaft or tube sections (I, II).

13. The drive shaft according to one of the preceding claims, **characterised in that** the shaft or tube portion not associated with the flange (2) and/or not adjacent to the flange (2) is broken down at least into a centre section (II) and an end section (I) located away from the flange, and the aforementioned sections have differing wall thicknesses (D_{I}, D_{II}) and/or differing inner diameters or outer diameters.

14. The drive shaft according to one of the preceding claims, **characterised in that** the flange (2) is formed by portions (6; 41) protruding over the tube or shaft end (30), which portions are spaced apart from each other in or parallel to the tube circumferential direction.

15. The drive shaft according to claim 14, **characterised in that** the protruding portions (6; 41) are connected via preferably circular arc-shaped flange tube sections (42), which project outwardly at an angle, at the shaft end (30).

## Revendications

1. Procédé de fabrication d'un arbre d'entraînement tubulaire creux (1), en particulier d'un arbre à cardan, à partir d'une ébauche de tube (10), en particulier à partir d'un tube en acier normalisé, soudé longitudinalement, lequel tube, par étirage simple ou multiple ou autre formage à froid, est allongé au moins en partie en réduisant son épaisseur de paroi ou son épaisseur et/ou en modifiant son diamètre intérieur et/ou extérieur, **caractérisé par le fait que** au moins une extrémité (30) de l'ébauche de tube ou extrémité d'arbre est formée par déformation à froid sous forme d'une bride (2) intégrée d'une seule pièce, dans lequel la partie (I, II) de l'ébauche de tube (10) qui n'appartient pas à la bride (2) et/ou n'est pas adjacente à celle-ci est étirée ou autrement modifiée par formage à froid de telle façon que la partie (III, 2) de l'arbre d'entraînement (1) qui correspond à la bride et la partie (III, 9) qui est adjacente à celle-ci présentent les épaisseurs de paroi (DIII, DIV) les plus élevées.

2. Procédé selon la revendication 1, **caractérisé en ce que** le formage à froid de l'extrémité de l'ébauche de tube ou du bout d'arbre (30) pour obtenir la bride (2) comprend son étirage simple ou répété et son pliage ultérieur.

3. Procédé selon la revendication 1 ou 2, dans lequel, au cours de la formation de la bride, dans une étape de préformage la paroi à l'extrémité (30) de l'ébauche de tube (10) est déplacée avec un poinçon de pliage (38) au moins partiellement conique dans une position angulaire oblique par rapport à l'axe central (4) du tube, et, dans une étape ultérieure de formage à plat la paroi positionnée obliquement est déplacée avec un poinçon de pliage (43) à angle droit dans une position perpendiculaire à l'axe central du tube, **caractérisé en ce que** les poinçons de pliage (38, 43) sont déplacés (55) exclusivement en ligne droite pendant la formation de la bride.

4. Procédé selon la revendication 1, 2 ou 3, dans lequel, au cours de la formation de la bride, dans une étape de préformage la paroi à l'extrémité (30) de l'ébauche de tube (10) est déplacée avec un poinçon de pliage (38) au moins partiellement conique dans une position angulaire oblique par rapport à l'axe central (4) du tube, et, dans une étape de formage à plat suivante la paroi positionnée obliquement est déplacée avec un poinçon de pliage à angle droit (43) dans une position perpendiculaire à l'axe central du tube, **caractérisé en ce que**, dans l'étape de formage à plat, la face frontale de la bride (2) est façonnée au moyen du poinçon de pliage à angle droit (43), de préférence en formant un talon ou une nervure de renforcement (61).

5. Procédé selon l'une quelconque des revendications précédentes, **caractérisé en ce que**, avant la formation de la bride, une ou plusieurs parties de paroi (34) sont découpées ou séparées d'une autre manière à l'extrémité de l'ébauche de tube ou au bout d'arbre (30) associé.

6. Procédé selon l'une quelconque des revendications précédentes, **caractérisé par** une opération préliminaire d'étirage d'un ou plusieurs tronçons de tube (I, II) qui sont respectivement espacés de la zone d'extrémité de tube (III, 9) conformée en bride (2), par laquelle sont effectuées une réduction de l'épaisseur (D) de la paroi respective et/ou une réduction et/ou un élargissement du diamètre intérieur et/ou extérieur respectif.

7. Procédé selon la revendication 6, **caractérisé par** une étape intermédiaire de recuit de l'ébauche de tube (10) après l'opération préliminaire d'étirage.

8. Procédé selon l'une quelconque des revendications précédentes, **caractérisé par** un étirage ou autre formage à froid d'une partie d'extrémité (I) de l'ébauche de tube (10) qui n'est pas associée à la bride (2), dans lequel au moins une réduction du diamètre extérieur et/ou intérieur de l'ébauche de tube et/ou de l'épaisseur de paroi (Di) de l'ébauche de tube est effectuée avec un outil de formage (26) conçu spécifiquement à cet effet.

9. Procédé selon l'une quelconque des revendications précédentes, **caractérisé par** l'étirage ou autre formage à froid d'au moins une partie centrale (II) de l'ébauche de tube (10) qui n'est pas associée à la bride (2) et qui est située entre les extrémités de tube (29, 30), dans lequel au moins une réduction du diamètre extérieur et/ou intérieur de l'ébauche de tube et/ou de son épaisseur de paroi (Dii) est effectuée avec un outil (27) spécialement conçu pour cette application.

10. Procédé selon l'une quelconque des revendications précédentes, **caractérisé par** un étirage ou autre formage à froid d'une partie d'extrémité en bride (III) de l'ébauche de tube associée au bride (2), dans lequel au moins une réduction du diamètre extérieur et/ou intérieur de l'ébauche de tube et/ou de l'épaisseur de paroi (Diii) de l'ébauche de tube (10) est effectuée avec un outil de formage (28) spécifiquement conçu à cet effet, et le diamètre extérieur et/ou intérieur de la partie d'extrémité de bride (III) et/ou son épaisseur de paroi (Diii) sont au moins réduits par rapport aux autres parties de l'ébauche de tube (I, II).

11. Arbre d'entraînement creux, en particulier arbre à cardan, qui est durci par étirage et/ou par autre formage à froid et qui, par cette opération, est pourvu d'épaisseurs de paroi (Di. Dii, Diii) et/ou de diamètres intérieurs et/ou extérieurs différents qui diffèrent sur son étendue longitudinale, en particulier produit par le procédé selon l'une quelconque des revendications précédentes, **caractérisé par** un bride trempé qui est formé intégralement et/ou d'une seule pièce sur au moins une extrémité (30) au moyen du formage à froid, dans lequel la bride (2), éventuellement aussi une section de tube ou d'arbre (9) directement adjacente à celle-ci, est réalisée avec une épaisseur (Diii) et/ou un diamètre plus grand que l'autre section d'arbre ou de tube (I, II).

12. Arbre d'entraînement selon la revendication 11, **caractérisé en ce que** la bride (2), éventuellement aussi une section de tube ou d'arbre (9) directement adjacente à celle-ci, est réalisée avec une épaisseur et/ou un diamètre plus grand que l'autre section d'arbre ou de tube (I, II).

13. Arbre d'entraînement selon l'une quelconque des revendications précédentes, **caractérisé en ce que** la partie de l'arbre ou du tube qui n'est pas associée à la bride (2) et/ou qui n'est pas adjacente à celle-ci est subdivisée au moins en une partie centrale (II) et une partie terminale (I) éloignée de la bride, et lesdites parties présentent différentes épaisseurs de paroi (Di, Dii) et/ou différents diamètres intérieurs et/ou extérieurs.

14. Arbre d'entraînement selon l'une quelconque des revendications précédentes, **caractérisé en ce que** la bride (2) est formé de sections (6 ; 41) dépassant respectivement de l'extrémité du tube ou de l'arbre (30), qui présentent des distances les unes par rapport aux autres s'étendant dans ou parallèlement à la direction circonférentielle du tube.

15. Arbre d'entraînement selon la revendication 14, **caractérisé en ce que** les sections dépassantes (6 ; 41) sont reliées à l'extrémité de l'arbre (30) par l'intermédiaire de tronçons de bride (42) faisant de préférence saillie angulairement vers l'extérieur, de préférence en arc.
